# EUROPEAN PATENT APPLICATION

(11) **EP 4 574 912 A1**
(43) Date of publication of application: **25.06.2025**
(21) Application number: 23220117.8
(22) Date of filing: 22.12.2023
(51) Int. Cl.: C09C 1/24, C08K 3/22, C09C 1/30, C09C 1/40, C09C 3/08, C09D 7/62

(54) **MODIFIED OXIDE PARTICLES**

(71) Applicant: Coöperatie Koninklijke Cosun U.A., 4814 NE Breda (NL)
(72) Inventor: LAZEROMS, Robert, 4814 NE Breda (NL)
(74) Representative: Nederlandsch Octrooibureau

(57) **Abstract**

The invention pertains to a modified oxide and/or hydroxide particles comprising aldaric acid which is covalently connected to the oxide and/or hydroxide particles.

## Description

The present invention relates to modified oxide and/or hydroxide particles.

Oxide and hydroxide particles are generally used as pigments and fillers. Such particles are not always compatible with the matrix, e.g. resins. Dispersant are generally used to improve the mixing in of the oxide and hydroxide particles in the matrix. Surfactants such anionic, zwitterionic and cationic surfactants are common dispersants. Also polymeric dispersants are used. An example of such polymeric dispersants is polyacrylate. Polyacrylate have the disadvantage that they are generally not from a biobased source and may be considered a microplastic. There is a need for new dispersing agents which do not have these drawbacks.

The objective of the present invention is to provide novel modified oxide particles.

The invention pertains to modified oxide and/or hydroxide particles comprising aldaric acid which is covalently connected to the oxide particles. By modifying the surface of the oxide and/or hydroxide particles with aldaric acid, the properties of the modified oxide and/or hydroxide particles are advantageously altered. Generally, the rheological property of the modified oxide and/or hydroxide particles improves. A high solids aqueous dispersion of titania (TiO₂) generally has an increased viscosity in the absence of shear compared to a dispersion of non-modified titania particles, while exerting shear on the dispersion reduces the viscosity (shear thinning behaviour), which allows easy processing of the dispersion. Aldaric acid, in particular galactaric acid, is capable of replacing polymeric dispersants, in particular polyacrylate dispersants. In addition, the aldaric acid-modified oxide and/or hydroxide particle, e.g. modified silica (SiO₂) or calcium-doped SiO₂, exhibit improved corrosion inhibition when added to a metal primer. The corrosion inhibition is observed to be comparable to strontium-chromium-based primers for coil coatings. The compatibility of the modified oxide particles of the invention generally have a better compatibility with various matrices, such as resins and cosmetic formulations. Aldaric acid, in particular galactaric acid, may also improve the adhesion of coating composition to substrates such as metal surfaces. Aldaric acid, in particular galactaric acid, has the further advantage that it is biobased, non-toxic and biodegradable.

The modified oxide and/or hydroxide particles of the invention have a d90 value of at most 100 µm, preferably at most 50 µm, more preferably at most 20 µm, even more preferably at most 10 µm, even more preferably at most 5 µm, and most preferably at most 1 µm, and at least 10 nm, preferably at least 20 nm, more preferably at least 50 nm and most preferably at least 100 nm. The particle size distribution, in particular the d90 value, is determined using conventional techniques such as laser diffraction using a Malvern Mastersizer.

In one embodiment, the modified oxide and/or hydroxide particles of the invention has a higher viscosity in a dispersion in a solvent, preferably an aqueous dispersion, compared to the non-modified oxide and/or hydroxide particles.

In one embodiment, the modified oxide and/or hydroxide particles of the invention exhibit shear thinning behaviour in a dispersion in a solvent, preferably an aqueous dispersion.

The oxide and/or hydroxide particles may be any oxide and/or hydroxide particles known in the art. The term "particles" has its common meaning and refers to particles with a certain particle size, e.g. as can be measured using laser diffraction. Preferably, the oxide particles comprise an inorganic oxide. Examples of suitable inorganic oxides include silica such as fumed silica, precipitated silica and colloidal silica; titania e.g rutile and anatase; alumina such as corundum and γ-Al₂O₃; zirconia such as cubic zirconia and yttria-stabilized zirconia; iron oxide such as hematite, magnetite and wüstite; calcium oxide such as lime; zinc oxide such as wurtzite; manganese oxide such as manganese dioxide, Mn₃O₄ and manganese oxide; and copper oxide such as CuO and CuO₂. Preferably, the inorganic oxide is silica, titania and hematite. Preferably, the hydroxide particles comprise an inorganic hydroxide. Examples of suitable inorganic oxides include silicium hydroxide such as orthosilicic acid; aluminium hydroxide such as gibbsite, and bayerite, iron hydroxide such as goethite; calcium hydroxide such as caustic lime; and clays such as bentonite and hydrotalcite. The inorganic oxides and hydroxides may be non-modified or modified. Modification refers to the introduction of another metal ion or metal oxide/hydroxide into the lattice of the inorganic oxide or hydroxide, such as in yttria-stabilized zirconia and calcium-doped SiO₂. It is envisaged to use a combination of two or more inorganic oxides and/or hydroxides.

In one embodiment, the oxide and/or hydroxide particles have hydroxyl moieties at the particle surface. Such hydroxyl moieties are generally capable of reacting with aldaric acid, preferably galactaric acid, to form the modified oxide and/or hydroxide particles of the invention.

The oxide and/or hydroxide particles (before modification) have a d90 value of at most 100 µm, preferably at most 50 µm, more preferably at most 20 µm, even more preferably at most 10 µm, even more preferably at most 5 µm, and most preferably at most 1 µm, and at least 10 nm, preferably at least 20 nm, more preferably at least 50 nm and most preferably at least 100 nm. The particle size distribution, in particular the d90 value, is determined using conventional techniques such as laser diffraction using a Malvern Mastersizer.

In one embodiment, the oxide and/or hydroxide particles have a surface area of at least 10 m²/g. Preferably, the oxide and/or hydroxide particles have a surface area of at least 20 m²/g, more preferably a surface area of at least 30 m²/g, and most preferably a surface area of at least 50 m²/g, and preferably a surface area of at most 300 m²/g, more preferably a surface area of at most 250 m²/g, and most preferably a surface area of at most 200 m²/g. The surface area can be determined using any method known in the art. Preferably, the surface area is determined using the BET method.

In one embodiment, the oxide and/or hydroxide particles may be at least partially or completely amorphous. In another embodiment, the oxide and/or hydroxide particles may be at least partially or completely crystalline. Preferably, the oxide and/or hydroxide particles are at least partially amorphous.

The aldaric acid suitable for the invention can be any aldaric acid known in the art. Aldaric acid has the general formula HOOC-(CHOH)ₙ-COOH. Examples of aldaric acid includes galactaric acid, glucaric acid, xylaric acid and mannaric acid. The aldaric acid can be provided in any form including the acids; aldarate salts such as sodium galactarate, ammonium galactarate and potassium glucarate; aldarate solvates such as mono-ethanolamine galactarate, diethanolamine galactarate, mono-isopropyl galactarate and mono-ethanolamine glucarate. Aldaric acid, preferably galactaric acid, is used to modify the surface of the oxide and/or hydroxide particles. Preferably, the aldaric acid is galactaric acid. Galactaric acid can be any galactaric acid known in the art. The galactaric acid can be synthetic or prepared from a natural source. Preferably, galactaric acid originates from a natural source, such as sugar beet or chicory root. It is believed that the galactaric acid reacts with hydroxyl present on the surface of the particles and forming a covalent bond. This surface modification leads to different properties of the oxide and/or hydroxide particles. For example the rheological properties was found to be improved as a higher viscosity and shear thinning behaviour were observed. Also, other carboxylic acids such as tartaric acid did not show this benefit. The inventors have observed that galactaric acid-modified titania particles behave similarly to polyacrylate-modified titania particles. In addition, the surface modification also leads to an improved corrosion inhibition. Without being bound by theory, it is believed that galactaric acid present at the surface of silica particles provide a better interaction to metal surfaces than the silica particles per se, and consequently provide an improved protective layer on the metal surface leading to an improved corrosion inhibition.

It is also envisaged that aldaric acid, preferably galactaric acid, is present next to the modified oxide and/or hydroxide particles of the present invention.

In one embodiment, the weight ratio of aldaric acid to the oxide and/or hydroxide particles is at least 0.01, preferably at least 0.02, more preferably at least 0.05 and most preferably at least 0.1, and preferably at most 2, more preferably at most 1.5 and most preferably at most 1.

In one embodiment, the weight ratio of galactaric acid to the oxide and/or hydroxide particles is at least 0.01, preferably at least 0.02, more preferably at least 0.05 and most preferably at least 0.1, and preferably at most 2, more preferably at most 1.5 and most preferably at most 1.

The invention further pertains to a kit of parts comprising oxide and/or hydroxide particles and aldaric acid. The invention further pertains to a kit of parts comprising oxide and/or hydroxide particles and galactaric acid. When oxide and/or hydroxide particles and aldaric acid, preferably galactaric acid, are combined, in for example a coating composition or an aqueous dispersion, the modified oxide and/or hydroxide particles of the invention are formed. This surface modification can occur at any suitable temperature, for example at room temperature. Increased temperatures improve the reaction speed of the surface modification.

The invention further pertains to a coating composition comprising a resin and modified oxide and/or hydroxide particles comprising aldaric acid which is covalently connected to the oxide and/or hydroxide particles. The invention further pertains to a coating composition comprising a resin and modified oxide and/or hydroxide particles comprising galactaric acid which is covalently connected to the oxide and/or hydroxide particles. The invention further pertains to a coating composition comprising a resin, a solvent and modified oxide and/or hydroxide particles comprising aldaric acid which is covalently connected to the oxide and/or hydroxide particles. The invention further pertains to a coating composition comprising a resin, a solvent and modified oxide and/or hydroxide particles comprising galactaric acid which is covalently connected to the oxide and/or hydroxide particles. The invention further pertains to a primer comprising a resin and modified oxide and/or hydroxide particles comprising aldaric acid which is covalently connected to the oxide and/or hydroxide particles. The invention further pertains to a primer comprising a resin and modified oxide and/or hydroxide particles comprising galactaric acid which is covalently connected to the oxide and/or hydroxide particles. The primer is generally a base coat capable of adhering to surfaces, in particular metal surfaces, and to a top coat. Preferably, the coating composition is a water-based coating composition.

The resin can be any resin known in the art and used in coating compositions. The resin of the invention may be a monomer, an oligomer or polymer. The resin may be an alkyd resin, an acrylic resin, a polyester resin, a polyester polyol resin, a silicone-based resin, a phenolic resin, a urethane-based or isocyanate based resin, an aminoplast and an epoxy resin.

Examples of alkyd resins include drying and non-drying alkyd resins. Examples of polyacrylate resins include polymers derived from one or more of acrylate, methacrylate, ethyl acrylate, 2-chloroethyl vinyl ether, 2-ethylhexyl acrylate, 2-hydroxyethyl methacrylate, butyl acrylate, butyl methacrylate, 2-hydroxypropyl methacrylate, 3-hydroxypropyl methacrylate, 2-hydroxypropyl methacrylate, 3-hydroxypropyl methacrylate, hydroxystearyl acrylate and hydroxystearyl methacrylate. Examples of suitable monomeric aminoplasts include condensation products of an aldehyde and methylurea, glycoluril, benzourea, dicyandiamide, formaguanamine, acetoguanamine, ammeline, 2-chloro-4,6-diamino-1,3,5-triazine, 6-methyl-2,4-diamino-1,3,5-triazine, 3,5-diaminotriazole, triaminopyrimidine, 2-mercapto-4,6-diaminopyrimidine, 2,4,6-triethyl-triamino-1,3,5-triazine, 1,3,5-triaminobenzene and melamine. Examples of phenolic resins include phenol-formaldehyde-based resins such as novolacs and resols. Examples of isocyanate-based resins include toluene diisocyanate (TDI), methylene diphenyl diisocyanate (MDI), 1,6-hexamethylene diisocyanate (HMDI), isophorone diisocyanate (IPDI) and 4,4'-diisocyanato dicyclohexylmethane (H₁₂MDI). Examples of epoxy resins include bisphenol A epoxy resins, bisphenol F epoxy resins, novolac epoxy resins, aliphatic epoxy resins, cycloaliphatic epoxy resins and glycidyl amine epoxy resins.

In one embodiment, the coating composition is a primer for coil coatings. The resin suitable for the primer is known in the art. Examples include polyesters, polyurethanes, aminoplasts, epoxy resins and combinations thereof. In one embodiment, the resin is a combination of a polyester polyol resin and an aminoplast. In one embodiment, the polyester polyol is prepared from adipic acid and phthalic acid monomers or from adipic acid, phthalic acid and isophthalic acid monomers. In one embodiment, the aminoplast is hexa(methoxymethyl)melamine (HMMM).

In one embodiment of the invention, the coating composition comprises the resin in an amount of at least 10 % by weight (wt%), based on the total weight of the coating composition. Preferably, the resin is present in an amount of at least 15 wt%, more preferably at least 20 wt%, even more preferably at least 30 wt%, even more preferably at least 40 wt%, even more preferably at least 50 wt% and most preferably at least 60 wt%, and preferably at most 95 wt%, more preferably at most 90 wt%, even more preferably at most 85 wt% and most preferably at most 80 wt%, based on the total weight of the coating composition.

The coating composition of the invention comprises the modified oxide and/or hydroxide particles of the invention. The modified particles of the invention improve the corrosion inhibition properties of the coating composition. Moreover, the abrasion and/or scratch resistance is generally improved. In addition, the adhesion to the substrate is generally increased. Also, the galactaric acid modified oxide and/or hydroxide particles generally are more compatible with a wide variety of matrices, e.g. resins, compared to the non-modified particles.

In one embodiment of the invention, the coating composition comprises the modified oxide and/or hydroxide particles in an amount of at least 0.1 % by weight (wt%), based on the total weight of the coating composition. Preferably, the modified oxide and/or hydroxide particles are present in an amount of at least 0.2 wt%, more preferably at least 0.5 wt%, even more preferably at least 1 wt%, even more preferably at least 1.5 wt%, even more preferably at least 2 wt% and most preferably at least 3 wt%, and preferably at most 60 wt%, more preferably at most 50 wt%, even more preferably at most 40 wt% and most preferably at most 30 wt%, based on the total weight of the coating composition.

In another embodiment of the invention, the coating composition comprises solids in an amount of at least 15 % by weight (wt%), based on the total weight of the coating composition. Preferably, the solids are present in an amount of at least 20 wt%, more preferably at least 30 wt%, even more preferably at least 40 wt%, even more preferably at least 50 wt%, and most preferably at least 60 wt%, and preferably at most 95 wt%, more preferably at most 90 wt%, even more preferably at most 80 wt% and most preferably at most 75 wt%, based on the total weight of the coating composition. The term "solids" is known to the man skilled in the art, and generally refers to the solid and/or non-volatile material (e.g. reactive diluents/solvents) in the coating composition; typically the solids include the resins, pigments, dyes, catalyst, etc. and does not include solvents that evaporate during the curing process. The amount of solids may also be referred to as "solids content".

In an embodiment of the invention, the coating composition of the invention can be further diluted by a solvent to obtain a solids content below 40 wt%. For certain applications, such as the application of extremely thin coating layers, this may be warranted. In such case, the solids content in the coating composition of the invention may be preferably at most 35 wt%, more preferably at most 30 wt% and most preferably at most 25 wt%, and preferably at least 1 wt%, more preferably at least 2 wt%, even more preferably at least 5 wt%, and most preferably at least 10 wt%.

The coating composition of the invention may further comprise a solvent. The solvent may be any suitable solvent known in the art. Preferred solvents are reactive solvents that comprise a functional group capable of reacting with the resin. The functional group may be hydroxyl, amine or thiol. Preferably, the functional group is a hydroxyl or an amine. Examples of reactive solvents include alcohols, such as methanol, ethanol, diethanol, amino ethanol, glycol, n-propanol, iso-propanol and ethanethiol, ethylene glycol, propylene glycol and neopentyl glycol; and amines, such as methyl amine, ethanol amine, dimethyl amine, methyl ethanol amine, diphenyl amine, trimethyl amine, triphenyl amine and piperidine; and acrylates such as acrylate, methacrylate, ethyl acrylate, 2-chloroethyl vinyl ether, 2-ethylhexyl acrylate, 2-hydroxyethyl methacrylate, butyl acrylate, butyl methacrylate, 2-hydroxypropyl methacrylate, 3-hydroxypropyl methacrylate, 2-hydroxypropyl methacrylate, and 3-hydroxypropyl methacrylate; and water.

Examples of non-reactive solvents include Solvent Naphtha^{®}, heavy benzene, various Solvesso^{®} grades, various Shellsol^{®} grades and Deasol^{®}, various white spirits, mineral turpentine oil, tetralin, decalin, methyl ethyl ketone, acetone and methyl n-propyl ketone. Non-reactive solvents that are incorporated at least partially and preferably completely, into the cured resin are preferred. Preferably, the non-reactive solvent has a boiling point above the curing temperature, preferably above 250 °C. The coating composition of the invention may comprise a reactive solvent and a non-reactive solvent, a combination of two or more solvents, or a combination of two or more reactive solvents. Coating compositions comprising a reactive solvent and/or water are preferred.

The coating composition of the invention may comprise the non-reactive solvent and/or the reactive solvent in an amount of at most 30 % by weight (wt%), based on the total weight of the coating composition. Preferably, the non-reactive solvent and/or the reactive solvent is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the coating composition.

In a further embodiment, the coating composition of the invention may comprise water in an amount of at most 85 % by weight (wt%), based on the total weight of the coating composition. Preferably, the water is present in an amount of at most 70 wt%, more preferably at most 60 wt%, even more preferably at most 50 wt%, even more preferably at most 40 wt% and most preferably at most 30 wt%, and preferably at least 1 wt%, more preferably at least 2 wt%, even more preferably at least 5 wt% and most preferably at least 10 wt%, based on the total weight of the coating composition.

The coating composition may further comprise additives commonly used in coating compositions including pigments and dyes, surfactants, flow controlling agents, thixotropic agents, anti-gassing agents, wetting agents, ultraviolet light stabilizers, adhesion enhancing promoters, waxes, filling agents, drying stabilizers, siccatives, matting agents, defoamers, and curing catalysts including oxidation catalysts such as metal carboxylates. The additives can be any additive known in the art. Examples of pigments and dyes include metal oxides like titanium dioxide, iron oxide, zinc oxide and chromium oxide; metal hydroxides; metal sulfides, metal sulfates, metal carbonates such as calcium carbonate; carbon black, china clay, phthalo blues and greens, organo reds and other organic dyes. The coating compositions of the invention may increase the color intensity of the pigments and dyes. This may lead to a reduction in the total amount of pigment and/or dye used. The curing catalyst is preferably a strong acid. Examples of suitable curing catalysts include p-toluenesulfonic acid, xylenesulfonic acid, dodecyl benzene sulfonic acid, dinonyl naphthalene sulfonic acid, dinonyl naphthalene disulfonic acid, fluorosulfuric acid, trifuoromethane sulfonic acid, hexafluoro antimonate compounds and catalysts derived thereof, phosphoric acid and sulfuric acid. Examples of ultraviolet light stabilizers include benzophenone, such as hydroxydodecyl benzophenone, 2,4-dihydroxy-3',5'-di-t-butylbenzophenone, 2-hydroxy-4-acryloxyethoxybenzophenone and 2-hydroxy-4-methoxy-2'-carboxybenzophenone.

The coating composition of the invention may comprise the additives in an amount of at most 30 % by weight (wt%), based on the total weight of the coating composition. Preferably, the additive is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the coating composition.

The amounts of resin, oxide and/or hydroxide particles, solvent, additives and any other components add up to 100% by weight of the coating composition.

Such coating compositions can be applied to a substrate and subsequently cured. The coated substrate may further be shaped as desired, e.g. to a food or beverage container. The present invention further pertains to a substrate coated with the cured coating composition of the invention.

The substrate of the invention can be any substrate known in the art. The substrate may be porous or non-porous. Examples of suitable substrates include metals, such as aluminum, aluminum alloys, steel, steel alloys, tin, tin alloys, zinc, zinc alloys, chrome and chrome alloys; glass such as fused silica glass, aluminosilicate glass, soda-lime-silica glass, borosilicate glass and lead-oxide glass; ceramics, such as porcelain, bone china, alumina, ceria, zirconia, carbides, borides, nitrides and silicides; plastic such as functionalized polyethylene (PE), functionalized polypropylene (PP), polyethylene terephthalate (PET), polyvinyl chloride (PVC) and nylons; and wood. Preferably, the substrate is metal, in particular aluminum.

Examples of coated substrates include food and beverage cans, coil coatings, automotive parts, bridges, boats and household appliances.

In one aspect of the invention, the invention pertains to a cosmetic composition comprising the modified oxide and/or hydroxide particles of the invention, optionally an active cosmetic ingredient, and a cosmetic excipient. In another aspect of the invention, the invention pertains to a cosmetic composition comprising the modified oxide and/or hydroxide particles of the invention, an active cosmetic ingredient, and a cosmetic excipient. The active cosmetic ingredient can be any conventional active cosmetic ingredient used in cosmetic compositions known in the art. The cosmetic excipient can be any conventional excipient used in cosmetic compositions known in the art. Preferably, the cosmetic composition is sunscreen. In one embodiment, the sunscreen comprises modified oxide and/or hydroxide particles wherein the oxide and/or hydroxide particles are titania and/or zinc oxide. Preferably, the sunscreen comprises modified titania particles. In one embodiment, the sunscreen comprises the modified oxide and/or hydroxide particles of the invention wherein the particles have a d90 of at most 1 µm.

The invention further pertains to dispersions of the modified oxide and/or hydroxide particles in a solvent. The solvent can be any solvent known in the art. Examples of suitable solvents include alcohols such as ethanol and isopropanol; glycols such as ethylene glycol, polyethylene glycol, propylene glycol and polypropylene glycol; alkanes such as pentane and hexane; and water. Preferably, the solvent is water.

In one embodiment, the dispersion may comprise water (or a solvent) in an amount of at most 90 % by weight (wt%), based on the total weight of the dispersion. Preferably, water is present in an amount of at most 80 wt%, more preferably at most 70 wt%, even more preferably at most 60 wt% and most preferably at most 50 wt%, and preferably at least 1 wt%, more preferably at least 2 wt%, even more preferably at least 5 wt% and most preferably at least 10 wt%, based on the total weight of the dispersion.

In one embodiment, the dispersion may comprise the modified particles of the invention in an amount of at most 60 % by weight (wt%), based on the total weight of the dispersion. Preferably, the modified oxide and/or hydroxide particles of the invention are present in an amount of at most 50 wt%, more preferably at most 40 wt%, even more preferably at most 30 wt% and most preferably at most 25 wt%, and preferably at least 1 wt%, more preferably at least 2 wt%, even more preferably at least 5 wt% and most preferably at least 10 wt%, based on the total weight of the dispersion.

In one embodiment of the invention, the modified particles of the invention have a d90 value of at most 100 µm, preferably at most 50 µm, more preferably at most 20 µm, even more preferably at most 10 µm, even more preferably at most 5 µm, and most preferably at most 1 µm, and at least 10 nm, preferably at least 20 nm, more preferably at least 50 nm and most preferably at least 100 nm.

The remaining part of the dispersion may be comprised of other components commonly used in dispersions. With the modified oxide and/or hydroxide particles, the solvent or water and the other components add up to 100 wt% of the total weight of the dispersion.

The invention further pertains to the use of the combination of oxide and/or hydroxide particles and aldaric acid, preferably galactaric acid, for corrosion inhibition. In a further aspect, the invention pertains to the use of the modified oxide and/or hydroxide particles of the invention for corrosion inhibition. The invention further pertains to the use of aldaric acid, preferably galactaric acid, for dispersing oxide and/or hydroxide particles. In yet a further aspect, the invention pertains to the use of aldaric acid, preferably galactaric acid, in coating compositions.

The modified oxide and/or hydroxide particles of the invention can be used in a wide range of applications. The invention pertains to the use of the modified oxide and/or hydroxide particles in food applications, paints, construction applications, textiles e.g. fiber treatment, leather lubrication, household care compositions, fabric care in laundry applications, healthcare applications, release agents, water-based coatings, personal care or cosmetic applications, carpeting, automobile parts, window frames, kitchen worktops, container closures, lunch boxes, closures, medical devices, household articles, food containers, dishwashers, outdoor furniture, blow-molded bottles, disposable non-woven fabrics, cables and wires, packaging, coil coating applications, can coatings, car refinish, mining, oil drilling, fuel additive and automotive applications. Each of these uses is separately contemplated and is meant to be explicitly and individually disclosed.

The invention is exemplified in the following Examples.

### Examples

### Examples 1 to 3 and Comparative Examples A and B: Aqueous TiO₂-based dispersions

80 grams of titanium dioxide (rutile) is mixed with 20 ml of a 1.6 wt% aqueous solution of ammonium galactarate and stirred for 2 minutes at 12,500 rpm (Example 1). The stability of the dispersion was measured using a Rheometer Anton Paar MCR301 (geometry CC27-SN11243; d= 0 mm). The viscosity of the dispersion at no shear rate was 4000 mPa.s. At a shear rate of 100 s⁻¹ the viscosity of the dispersion was 90 mPa.s, showing that the dispersion was shear thinning. The stability of the dispersion was good as coalescence of the particles was very low after 3 days of storage.

A similar dispersion was prepared using sodium galactarate (0.8 wt% aqueous solution; Example 2). The viscosity of the dispersion at no shear rate was 4000 mPa.s. At a shear rate of 100 s⁻¹ the viscosity of the dispersion was 90 mPa.s, showing that the dispersion was shear thinning.

A similar dispersion was prepared using glucaric acid (0.8 wt% aqueous solution; Example 3). The viscosity of the dispersion at no shear rate was 2,500 mPa.s. At a shear rate of 100 s⁻¹ the viscosity of the dispersion was 60 mPa.s, showing that the dispersion was shear thinning.

A similar dispersion was prepared using tartaric acid (0.8 wt% aqueous solution; Comparative Example A). The viscosity of the dispersion at no shear rate was 30,000 mPa.s. At a shear rate of 100 s⁻¹ the viscosity of the dispersion was 150 mPa.s, showing that the dispersion was shear thinning. The stability of the dispersion was not good as coalescence of the particles was significant after 3 days of storage.

A similar dispersion was prepared using citric acid (0.8 wt% aqueous solution; Comparative Example A). The viscosity of the dispersion at no shear rate was 20,000 mPa.s. At a shear rate of 100 s⁻¹ the viscosity of the dispersion was 160 mPa.s, showing that the dispersion was shear thinning. The stability of the dispersion was not good as coalescence of the particles was significant after 3 days of storage (similar to tartaric acid).

## Claims

1. Modified oxide and/or hydroxide particles comprising aldaric acid which is covalently connected to the oxide and/or hydroxide particles.

2. Modified oxide and/or hydroxide particles according to claim 1 wherein the aldaric acid is galactaric acid, a salt of galactaric acid or a solvate of galactaric acid.

3. Modified oxide and/or hydroxide particles according to any one of claims 1 and 2 wherein the oxide and/or hydroxide particles are an inorganic oxide and/or hydroxide.

4. Modified oxide and/or hydroxide particles according to any one of the preceding claims wherein the oxide and/or hydroxide particles comprise at least one inorganic oxide selected from silica, titania, alumina, iron oxide and zirconia.

5. Modified oxide particles according to any one of the preceding claims wherein the weight ratio of aldaric acid and the oxide and/or hydroxide particles and is at least 0.01.

6. Coating composition comprising a resin and modified oxide and/or hydroxide particles according to any one of the preceding claims.

7. Coating composition according to claim 5 wherein the composition is a primer for coil coatings.

8. Coating composition according to any one of claims 5 and 6 wherein the modified oxide and/or hydroxide particles comprises unmodified or modified silica.

9. Use of the combination of oxide and/or hydroxide particles and aldaric acid for corrosion inhibition.

10. Use of the modified oxide and/or hydroxide particles according to any one of claims 1 to 5 for corrosion inhibition.

11. Use of aldaric acid for dispersing oxide and/or hydroxide particles.

12. Use of aldaric acid in coating compositions.
